# EUROPEAN PATENT SPECIFICATION

(11) **EP 2 318 161 B1**
(45) Date of publication and mention of the grant of the patent: **30.04.2014**
(21) Application number: 09784627.3
(22) Date of filing: 23.06.2009
(51) Int. Cl.: B21J 15/02

(54) **JOINING APPARATUS AND METHOD**
FÜGEVORRICHTUNG UND -VERFAHREN
APPAREIL ET PROCÉDÉ D'ASSEMBLAGE

(30) Priority: 30.07.2008 GB 0813883
(43) Date of publication of application: 11.05.2011
(60) Divisional application: 13171139.2
(73) Proprietor: Henrob Limited, Flintshire CH5 2NX (GB)
(72) Inventor: CLARKE, Christopher, James, Cheshire CW6 9RX (GB); DOO, Roger, Stanton, Flintshire LL12 9NH (GB); LUCAS, Margaret, East Dunbartonshire G66 1EU (GB); TRINICK, Russell, John, Flintshire CH7 4AB (GB)
(74) Representative: Roberts, Peter David
(86) International application number: PCT/GB2009/001572
(87) International publication number: WO 2010/012973

(56) References cited:
- DE-A1- 19 701 088
- DE-A1- 19 905 527
- DE-B3-102007 007 496

## Description

The present invention relates to an apparatus and method for joining components together using rivets and more particularly, but not exclusively, to joining sheet material such as metals.

Self-piercing riveting (SPR) is a well-established technique for joining together components such as, for example, sheet metal. A self-piercing rivet typically comprises a head and a partially hollow cylindrical shank that terminates in an annular piercing edge and is inserted into one or more sheets of material. The rivet is driven by a punch of a setting tool into the sheets such that that shank pierces through the upper sheet (or sheets) and flares outwardly whilst supported by a die. It is inserted without full penetration such that the deformed end of the rivet remains encapsulated by an upset annulus of the material thus forming a mechanical interlock. Since the lowermost sheet is not penetrated the joint has added resistance to corrosion. Self-piercing riveting enables sheet material to be joined without the requirement for the pre-drilling or pre-punching of a hole in the material.

Self-piercing riveting technology has application in many manufacturing industries but has been particularly successful in the automotive industry where there is a drive to use material of lighter weight without reducing safety. SPR has been used to join component parts such as aluminium vehicle body panels, which cannot be spot-welded easily. SPR techniques have proved successful in this context not only because they produce joints of good strength and fatigue properties that can be easily automated on a production line but also because the joints are aesthetically acceptable in that there is little distortion of the upper surface of the sheet material around the rivet.

SPR is faced with increasing challenges in terms of the types of joints that manufacturers would like to produce using the technology. For example, there is a trend to using higher strength sheet material compositions such as, for example, high strength steel and ultra-high strength steel (having an ultimate tensile strength of up to 1400MPa or more). Moreover there is a desire to rivet thicker sheets or stacks of sheets. These developments have put increasing demands on SPR technology. Rivets can be made harder to withstand the insertion forces required to pierce the high strength metals but they then exhibit lower ductility and may be prone to fracture during the flaring stage of insertion. Advances in joining performance have been achieved by modifying such things as the rivet geometry, the heat treatment regime applied to it and the production techniques used to produce it but improvements of this kind are of increasingly small incremental steps. Moreover, the thicker and/or higher strength materials generally require increased setting forces in order to insert the rivet and thus put increased demands on the setting tools, the C-frame in which they are supported and the robotic handlers that carry the C-frame.

Attempts have been made to extend the limits of SPR by heat-treating the sheet material in the area to be joined so as to improve its formability. Techniques using induction coils or laser technology have been employed to provide a local application of heat but it has been found that the resulting modification to the microstructure of the metal provides a joint that has inferior mechanical properties compared to the remainder of the sheet. Other attempts have been made to alter the general properties of sheet metal material so that it is more suitable for SPR.

An alternative joining technique to self-piercing riveting is that of clinching whereby a punch is applied to the sheet material without the rivet present. The sheets are locally deformed out of their planes into a specially constructed die to form a "button" joint whereby they are mechanically interlocked to form a secure joint. Such joints are not generally as strong as joints formed by SPR and are most commonly used in relation to joining only two sheets. The desire to join stronger and thicker sheets of material presents clinching technology with similar problems to those described above in relation to SPR.

One approach to improving the capability of clinching or SPR techniques has been to use a percussion mechanism as part of the insertion tool to apply successive rapid impacts to the rivet or the sheet material. One example of this is described in US 6,199,271 (Hahn). Another is described in US 6,862,913 (DaimlerChrysler) in which rapid percussive impacts are applied by vibration of a punch or die longitudinally in the direction of sheet thickness at a high frequency in the ultrasonic range (so-called "vibro-impacting"). The impacts produce high peak forces during the phase where the punch deforms the material. After this, torsional oscillations are applied during a cold- upsetting phase in order to effect cold-pressure welding. It is presented that the process benefits from frictional heating generated by the ultrasonic vibrations and that this decreases the resistance to deformation of the parts during joining.

Ultrasonic energy has been used in other metal formation techniques such as forging, forming, welding, and dimpling of metals. Ultrasonic welding of non-ferrous metals can be achieved by application of vibrations parallel to the weld surface without application of heat and without melting the materials. The ultrasonic vibrations serve to disperse surface oxides and encourage plastic flow of the material such that the interface surfaces are deformed and key into each other. An example of metal forming using ultrasonic energy is described in US 3,341,935 (Balamuth) in which a sheet metal is dimpled around a pre-drilled hole by application of a tool to the surface around the hole, the tool being vibrated at ultrasonic frequency to allow a transfer of energy. US 3,483,611 (also Balamuth) discusses a riveting technique in which a rivet is first inserted into a component and then ultrasonic energy is applied to the rivet simultaneously with a static force to soften the rivet material so as to form a rivet heat.

DE19905527, forming the preamble of claims 1 and 10, discloses a ductile workpiece joining device having a C-frame with upper and lower arms and a holding-down device. The reaction part of the joining tool is fixed to the linearly movable part of the holding-down device, so that the entire joining tool can move together with the linearly movable part of the holding-down device. A vibration generator is used to apply vibrations to the punch of the joining tool.

It is one object of the present invention, amongst others, to obviate or mitigate at least one of the aforementioned disadvantages and to provide for an improved joining method and apparatus.

According to a first aspect of the present invention there is provided a method for producing a joint as set out in claim 1.

The application of ultrasound to the material being joined whilst applying a compressive force to deform the material via the rivet reduces the mean forming forces required for the joint. In particular, it induces a so-called acousto-plastic effect in the material being formed which temporarily reduces its strength so as to exhibit increased ductility. This is quite different from a thermal softening process in which heat energy is generated and absorbed into the material With the acousto-plastic effect there is no softening of the material through significant increase in thermal energy levels but rather an almost instantaneous increase in ductility is achieved when only a small amount of acoustic energy is applied as a result of the energy being absorbed into lattice dislocations of the metal such that resistance to their movement is significantly reduced.

The separate application of ultrasonic energy in addition to applying a compressive deforming force may result in continuous contact between the die and the workpiece so that the ultrasonic energy is continuously transmitted to the workpieces e.g. it may rely on a continuous acoustic coupling.

The application of ultrasonic energy in addition to applying a compressive deformation force affects the friction between the rivet and the first surface of the material being joined so as to lower the compressive force needed.

The workpieces may be sheet material or otherwise.

The at least two overlapping workpieces may comprise a first workpiece that is closest to the punch and a second workpiece that is closest to the die. There may be one or more intermediate workpieces between the first workpiece and the second workpiece. The rivet may be inserted such that the rivet does not penetrate the workpiece that is closest to the die. The rivet may pierce through at least a first workpiece that is closest to the punch and may also pierce through one or more intermediate workpieces. The rivet is inserted into the workpieces without full penetration (i.e. is does not pierce through the second workpiece) such that a deformed end of the rivet remains encapsulated by an upset annulus of the material.

The rivet may have a head and a shank, which may be hollow or partially hollow. Alternatively it may take the form of a solid slug with or without a head

Ultrasonic energy may be applied during all of the time taken to form the joint, at several different times, or just part of that time. The energy level imparted to the workpiece(s) may vary during the formation of the joint It may be applied by the punch and the die.

The ultrasound energy is preferably applied in a direction that is substantially the same as the compressive force that deforms the workpieces.

The workpiece may be clamped in a region around the joining area before, during and/or after deformation by the tool. Any suitable sequence and force profile of clamping may be applied. For example, the workpiece(s) may be pre-clamped with a high force sufficient to prevent significant deformation of the workpieces in the region around the joint. The pre-clamping force may be designed to ensure an appropriate level of acoustic contact between the workpieces. Alternatively, in an initial phase there may be no clamping force or a negligible clamping force applied and then a relatively high force applied just as the deformation is concluding (late-clamping) or just after it has concluded (post-clamping). In the case of a rivet being inserted, "conclusion" may be considered to be the point where the rivet is being driven home to complete the joint. The term "negligible" or "no" clamping force is intended to include a small force that is intended only to hold the workpiece steady during the forming operation or sufficient to hold the tool steady relative to the workpiece without it rattling.

According to a second aspect of the present invention there is provided joining apparatus as set out claim 10.

The ultrasonic source may be coupled to the die via an ultrasonic horn. The source may be a piezo-electric transducer and may be coupled to the ultrasonic horn via a booster that serves to amplify the amplitude of the ultrasonic waveform.

At least part of the die may be provided by at least part of the ultrasonic horn. For example, the ultrasonic horn may have a first surface that faces the workpiece and has a die cavity defined therein. Alternatively, the horn may be acoustically coupled to the die.

The die may be biased towards the punch by a biasing member.

The ultrasonic source may be coupled to the punch or a nose of the joining tool in addition to it being coupled to the die.

The nose is typically provided at one end of the joining tool and defines a contact surface for contacting the at least two overlapping workpieces whilst the production of the joint is effected. The punch may be reciprocally disposed such that it is movable relative to the nose between an extended position in which it extends towards the contact surface and a retracted position in which it does not extend from the nose and leaves space for a rivet to be positioned between the punch and the workpieces.

The nose may be operable to apply a clamping force of any magnitude or profile to the workpieces.

The ultrasonic source may be coupled to the die such that the ultrasonic energy propagates from the die to the joining area in a direction substantially parallel to the direction in which the compressive force is applied by the punch.

Specific embodiments of the present invention will now be described, by way of example only, with reference to the accompanying drawings in which:
Figure 1 is a side view of joining apparatus including a rivet setting tool supported over a die in a C-frame, in accordance with the present invention;
Figure 2 is a schematic representation of part of the rivet setting tool in contact with two workpieces supported over a die and in which ultrasonic energy is applied via a die in accordance with the present invention; and
Figure 3 is a schematic representation of part of a non-claimed embodiment in which ultrasonic energy is applied directly to the workpieces.

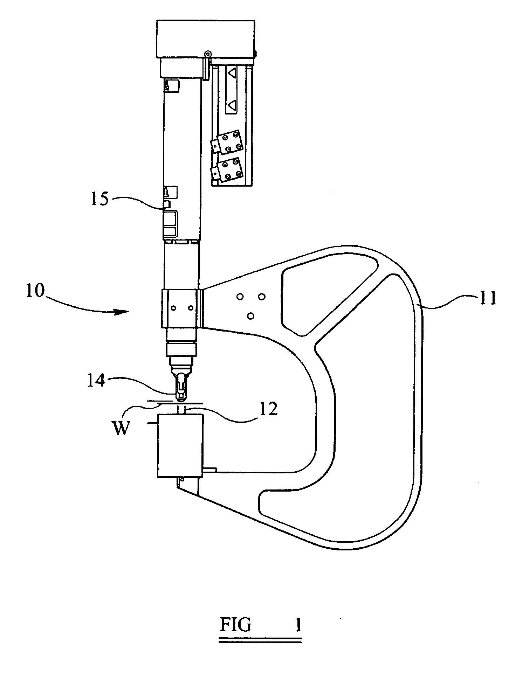

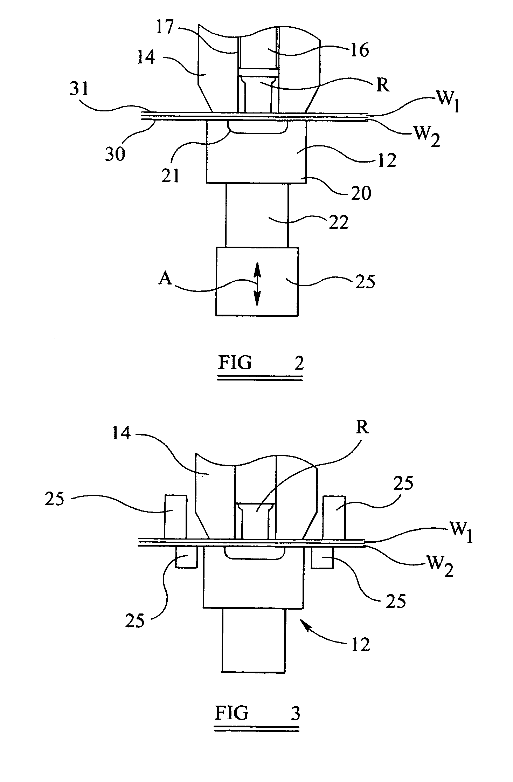

Referring now to figures 1 and 2 of the drawings, a rivet setting tool 10 is mounted on an upper arm of conventional C-frame 11 above a rivet-upsetting die 12 supported in the lower arm. Self-piercing rivets R (one shown in figure 2 only) are inserted by the tool 10 into workpieces W (figure 2) supported over the die 12 as is well known in the art. It is to be appreciated that whilst the specific embodiment described herein relates to the feeding and insertion of rivets it has application to other non-claimed fasteners that are inserted into workpieces using a die such as, for example, slugs.

The C-frame 11 is mounted on a robot manipulator (not shown) such that it is movable with the tool 10 by the robot towards and away from the workpieces W as required. Feed apparatus (not shown) alongside the C-frame 11 is designed to supply rivets R to the setting tool 10 in a predetermined and controllable fashion from a bulk source. This may be achieved, by for example, using tape feed or a compressed gas (e.g. air) delivery system that propels the rivets along a tube or track. The control of the setting tool and the feed apparatus is normally via software. Such rivet supply systems and control systems are well known and will not therefore be described herein.

The setting tool 10 is of conventional configuration and so is not described in detail. In general terms, it comprises a cylindrical housing 15 that houses a reciprocal plunger that is driven in translation relative to the housing by a hydraulic, pneumatic or electric drive. The housing has an end nose portion 14 with an annular surface for contact with the workpieces W in which the joint is to be formed and the plunger terminates in a punch 16 that reciprocates in a passage 17 extending through the nose. In order to insert a rivet R into the workpieces W the plunger is driven so that the punch descends in the passage 17 extends beyond the nose 14 and comes into contact with a rivet R that has been fed to end of the passage 17 in the nose 14. Continued application of the force drives the punch 16 through the nose 14 so that the rivet R is inserted into the workpieces W.

In figure 2 the workpieces W are in the form of two sheet metal panels W₁, W₂ that lie one on top of the other over the die 12.

The tool 10 is operable such that the nose 14 moves downwards from the position shown in figure 1 to engage and optionally clamp the workpieces W₁, W₂ together as shown in figure 2.

The die 12 is generally cylindrical with a head 20 defining an open die cavity 21 for facing the setting tool punch 16 and a depending stem 22 that is of reduced diameter compared to the head such that an annular surface 23 extending radially relative to the central axis of the die 12 is defined on the underside of the head 20.

One specific embodiment of the die is shown in detail in figure 2. In this particular arrangement, the die 12 is connected to an ultrasonic horn 25 (also referred to as a "sonotrode"). The horn 25 is coupled to a piezo-electric transducer (not shown) that is configured to vibrate at a suitable ultrasonic frequency such as, for example, 20kHz. This acoustic vibration is transmitted from the transducer to the horn 25 by a booster (not shown) that is interposed between them and is configured to amplify the amplitude of the vibrations by a predetermined gain factor. In this manner acoustic vibrations (represented by arrow A) propagate along the length of the die stem 22 to the surface of the die head 20 so that they are imparted to the lowermost workpiece W₂ by virtue of acoustic coupling between the die surface and the workpiece W₂, the vibration propagating in substantially the same direction as the compressive force (represented by arrow F) applied by the punch 16.

In operation the workpieces, which are represented in figure 2 by two sheets W₁, W₂ of overlying high strength steel, are introduced between the die 12 and the tool 10 such that they are supported over the die head 20 with a lower surface 30 of the lower sheet W₂ in contact with the surface of the die head 20. The setting tool 10 is then operated so that the nose 14 descends and is brought into contact with an upper surface 31 of the upper sheet W₁. The nose 14 applies a significant clamping force to compress the sheet material between it and the die 12. The force may be of such a magnitude that flow of material during the rivet insertion operation is affected. The longitudinal ultrasonic acoustic vibrations are transmitted to the lower sheet W₂ in the same general direction as the compressive force F applied by the punch and die combination and serve to increase the ductility of that sheet by virtue of the acousto-plastic effect. The setting tool 10 is then operated to drive the punch 16 downwards to insert the rivet R into the workpieces W as described above. As the rivet R is inserted, the plastic form of the lower sheet W₂ in the region of the joint enables the rivet shank to penetrate into the material and flare outwards sufficiently to provide a strong mechanical interlock without failure or cracking. It is inserted without full penetration of the lower sheet W₂ such that the deformed end of the rivet R remains encapsulated by an upset annulus of the material. The softening of the material caused by the acousto-plastic effect ceases almost immediately after the transducer 26 is turned off and the original properties of the sheet material return.

In the above described arrangement the ultrasonic acoustic energy is transmitted to the lower sheet W₂ by the horn 25 both before the insertion of the rivet R commences and during its insertion. In practice, the ultrasonic acoustic energy may be applied by the transducer at any appropriate stage during the rivet insertion process as determined by the control system. For example, the energy may be applied before the rivet R comes into contact with the upper sheet W₁, during contact, or at any stage between the rivet R starting to penetrate into the top sheet W₁ and it piercing through the top sheet W₁ so as to come into contact with the lower sheet W₂. It may be also applied for a short time after the rivet R has been fully inserted.

The ultrasonic acoustic energy may be applied at discrete time intervals during the rivet insertion for a given joint by turning the transducer on and off according to instructions programmed into the control system or according to feedback signals received during the insertion as a result of process monitoring. Moreover, the amplitude and/or frequency may vary during the insertion of a given rivet or may vary from joint to joint depending on its characteristics and the rivet type.

It will be understood that any magnitude of clamping force may be used. For example it may be sufficient to apply a force that is designed only to hold the sheets steady during the riveting operation. Alternatively the force could be much more significant than this in that it could affect the flow of sheet material in and around the joint during the rivet insertion process. The magnitude of the clamping force may vary during the rivet insertion operation in any suitable manner and in accordance with a program being followed by the control system. For example, the clamping force may be relatively large before and during rivet insertion or may be almost negligible for a predetermined part of the rivet insertion process before increasing in magnitude significantly. Some examples of force clamping profiles are described in our patents US 6,742,235 and EP 0675774.

The die may be formed in its entirety by the ultrasonic horn or it may be defined only at the end of the horn. Moreover, it may simply be provided by a cavity defined in an end surface of the horn.

It will be appreciated that other ultrasonic frequencies may be used as opposed to 20kHz. Any frequency in the range 18kHz to 60kHz is thought to be suitable, but preferably the frequency is in the range 20 to 40kHz. The amplitude of the acoustic vibrations emitted by the piezo-electric transducer may typically be in the region of 8-10*µ*m but other amplitudes may be possible. The gain factor applied by the booster may be typically in the range 1.5 to 5 but other magnitudes are possible.

In an alternative embodiment a cross-coupled booster is used so its input and output vibrations are out of alignment i.e. they may be disposed such that the transducer vibrations propagate in a direction that is 90 degrees to those propagating in the horn. In this arrangement the transducer and booster may lie along the lower arm of the C-frame 11 whilst the horn 25 extends upwardly towards the joint forming area as before.

In a further alternative embodiment ultrasonic acoustic energy may be applied to the upper sheet W₁ at the same time as it is applied to the lower sheet W₂ by the die 12. For this purpose a second ultrasonic horn is fitted in the nose 14 and/or the punch 16 so that ultrasonic energy may be imparted to the upper sheet W₁ at least. In the case of the nose 14, the energy is imparted into the region around the rivet. In the case of the punch the energy is transmitted through the rivet.

By suitable control of the frequency and ultrasonic amplitude under load using an ultrasonic generator with resonance tracking capability the acoustic energy may be transmitted to all sheets W in the stack by applying the ultrasonic energy at the die.

In figure 3, there is illustrated an alternative arrangement which does not form part of the claimed invention in which ultrasonic horns 25 are arranged to make direct contact with the upper sheet W₁ and lower sheet W₂ so that ultrasonic energy is imparted independently of the nose/punch or die. The horns in this instance are depicted as annular such that they surround the joining area but may take any suitable form. It is to be appreciated that only one of the horns may be used in practice.

Although this is not part of the claimed invention, the above-described methods may be applied to clinching operations where the workpiece is deformed out of its plane into a die directly by a punch without using a rivet. Once the sheets are deformed into the button joint a rivet or slug may be inserted to strengthen the joint. Examples of clinching techniques are described in our patents stemming from WO93/10925.

The methods described above allow SPR and clinching (not claimed) to be used to form joints in higher strength materials (e.g. Ultra High Strength Steels or austenitic stainless steel 301, 316) or thicker materials than is currently possible. Joints can be made with lower compression (insertion) forces applied by the punch. This has several advantages, in particular C-frames can be made lighter thereby improving accessibility and cost. The rivet setting and clinching tools may be lighter and smaller, thereby reducing the size and cost of robot handling equipment. This in turn allows higher speed robot movements so that cycle times are reduced. Lower hardness rivets can be used and the improved ductility of the rivet reduces the frequency of failure by tearing, cracking or other fractures.

Numerous modifications and variations to the embodiment described above may be made without departing from the scope of the invention as defined in the appended claims. For example, the source of ultrasonic energy may be provided by any suitable transducer besides a piezo-electric transducer such as, for example, a magnetostrictive transducer. Furthermore, the die may take any suitable form suitable for reacting the insertion forces, including a flat surface.

## Claims

1. A method for producing a joint in at least two overlapping workpieces (W₁, W₂) using a joining tool (10) comprising a punch (16) to insert a self-piercing rivet (R) into the workpieces (W₁, W₂) to form the joint, the workpieces (W₁, W₂) having a first surface (31) that is nearest the tool (10), the method comprising placing the workpieces (W₁, W₂) between the tool (10) and a die (12), and positioning a rivet (R) between the punch (16) and the first surface (31), using the punch (16) to insert the rivet (R) into the at least two overlapping workpieces (W₁ W₂) such that the first surface (31) is pierced by the rivet (R), the punch (16) applying a compressive force during rivet insertion to deform the workpieces (W₁, W₂) into a joint at a joining area between the tool (10) and the die (12), **characterised in that** the die applies continuous ultrasonic energy to at least one of the workpieces (W₁, W₂) in the joining area for at least part of the time during production of the joint so as to increase the ductility of at least one of the workpiece (W₁, W₂) in the joining area.

2. A method according to claim 1, wherein the at least two overlapping workpieces (W₁, W₂) comprise a first workpiece (W₁) that is nearest to the tool (10) and a second workpiece (W₂) that is nearest to the die (12), the rivet (R) being inserted such that it does not penetrate through the second workpiece (W₂).

3. A method according to any preceding claim, wherein the die (12) forms at least part of an ultrasonic horn (25).

4. A method according to any preceding claim, wherein the energy level imparted to the workpieces (W₁, W₂) varies during the formation of the joint.

5. method according to any preceding claim, wherein the ultrasonic energy is applied in a direction that is substantially the same as the direction of the compressive force that deforms the workpieces (W₁, W₂).

6. A method according to any preceding claim, wherein the workpieces (W₁, W₂) are clamped between the tool (10) and the die (12) by a clamping force in the region around the joining area for at least part of the time it takes to produce the joint.

7. A method according to any preceding claim, wherein negligible or no clamping force is applied whilst the material is deformed by application of the compressive force and after production of the joint a damping force is applied.

8. A method according to any preceding claim, wherein the ultrasonic energy is an acoustic vibration signal that is transmitted to the workpieces (W₁, W₂) and wherein the acoustic vibration signal preferably has a frequency in the range 18 to 60kHz and/or the acoustic vibration signal has an amplitude of 2-50µm.

9. A method for manufacturing a product using a joining tool to form a joint in accordance with any of claims 1 to 8, the joining tool being manipulated by robot handling equipment.

10. Joining apparatus for producing a riveted joint in at least two overlapping workpieces (W₁, W₂) comprising a joining tool (10) having a reciprocal punch (16) disposed over a die (12) over which the workpieces (W₁, W₂) can be supported, the punch (16) being movable towards the die (12) for inserting a rivet (R) into the workpieces (W₁, W₂) and applying a compressive force to the workpieces (W₁, W₂) in a Joining area, **characterised in that** the die (12) is coupled to a source of ultrasonic energy so that it can apply ultrasonic energy to at least one of the workpieces (W₁, W₂) in the joining area for at least part of the time during production of the joint so as to increase the ductility of at least one of the workpieces (W₁, W₂) in the joining area.

11. Joining apparatus according to claim 10, wherein the ultrasonic source is coupled to the die (12) via an ultrasonic horn (25) and, preferably, at least part of the die (12) is provided by at least part of the ultrasonic horn (25), the ultrasonic horn (25) preferably having a first surface that faces the workpieces (W₁, W₂) and has a die cavity (21) defined therein.

12. Joining apparatus according to claim 10 or 11, wherein the die (12) is biased towards the punch (16) by a biasing member.

13. Joining apparatus according to any one of claims 10 to 12, wherein the ultrasonic source is coupled to the die (12) such that the ultrasonic energy is applied to the joining area in a direction that is substantially the same as the direction of the compressive force applied by the punch (16) to deform the workpieces (W₁, W₂).

## Patentansprüche

1. Verfahren zur Herstellung einer Fügeverbindung in mindestens zwei sich überdeckenden Werkstücken (W₁, W₂) bei Benutzung eines Fügewerkzeuges (10), das einen Stempel (16) aufweist, um einen selbstdurchstoßenden Niet (R) in die Werkstücke (W₁, W₂) einzusetzen, um die Fügeverbindung zu bilden, wobei die Werkstücke (W₁, W₂) eine erste Fläche (31) aufweisen, die dem Werkzeug (10) am nächsten ist, wobei das Verfahren die folgenden Schritte aufweist: Anordnen der Werkstücke (W₁, W₂) zwischen dem Werkzeug (10) und einer Matrize (12); und Positionieren eines Niets (R) zwischen dem Stempel (16) und der ersten Fläche (31), wobei der Stempels (16) benutzt wird, um den Niet (R) in die mindestens zwei sich überdeckenden Werkstücke (W₁, W₂) einzusetzen, so dass die erste Fläche (31) durch den Niet (R) durchstoßen wird, wobei der Stempel (16) eine Druckkraft während des Einsetzens des Niets anwendet, um die Werkstücke (W₁, W₂) zu einer Fügeverbindung in einem Fügebereich zwischen dem Werkzeug (10) und der Matrize (12) zu verformen, **dadurch gekennzeichnet, dass** die Matrize eine kontinuierliche Ultraschallenergie auf mindestens eines der Werkstücke (W₁, W₂) im Fügebereich über mindestens einen Teil der Zeit während der Herstellung der Fügeverbindung anwendet, um so die Verformbarkeit von mindestens einem der Werkstücke (W₁, W₂) im Fügebereich zu erhöhen.

2. Verfahren nach Anspruch 1, bei dem die mindestens zwei sich überdeckenden Werkstücke (W₁, W₂) ein erstes Werkstück (W₁), das dem Werkzeug (10) am nächsten ist, und ein zweites Werkstück (W₂) aufweisen, das der Matrize (12) am nächsten ist, wobei der Niet (R) so eingesetzt wird, dass er nicht durch das zweite Werkstück (W₂) dringt.

3. Verfahren nach einem der vorhergehenden Ansprüche, bei dem die Matrize (12) mindestens einen Teil eines Ultraschalltrichters (25) bildet.

4. Verfahren nach einem der vorhergehenden Ansprüche, bei dem das Energieniveau, das den Werkstücken (W₁, W₂) erteilt wird, während der Bildung der Fügeverbindung variiert.

5. Verfahren nach einem der vorhergehenden Ansprüche, bei dem die Ultraschallenergie in einer Richtung angewandt wird, die im Wesentlichen die gleiche ist wie die Richtung der Druckkraft, die die Werkstücke (W₁, W₂) verformt.

6. Verfahren nach einem der vorhergehenden Ansprüche, bei dem die Werkstücke (W₁, W₂) zwischen dem Werkzeug (10) und der Matrize (12) mittels einer Klemmkraft in dem Bereich um den Fügebereich über mindestens einen Teil der Zeit festgeklemmt werden, die für die Herstellung der Fügeverbindung in Anspruch genommen wird.

7. Verfahren nach einem der vorhergehenden Ansprüche, bei dem eine vernachlässigbare oder keine Klemmkraft angewandt wird, während das Material durch Anwendung der Druckkraft verformt wird, und bei dem nach der Herstellung der Fügeverbindung eine Klemmkraft angewandt wird.

8. Verfahren nach einem der vorhergehenden Ansprüche, bei dem die Ultraschallenergie ein akustisches Schwingungssignal ist, das auf die Werkstücke (W₁, W₂) übertragen wird, und wobei das akustische Schwingungssignal vorzugsweise eine Frequenz im Bereich von 18 bis 60 kHz aufweist, und/oder wobei das akustische Schwingungssignal eine Amplitude von 2 bis 50 µm aufweist.

9. Verfahren zur Herstellung eines Produktes bei Benutzung eines Fügewerkzeuges, um eine Fügeverbindung in Übereinstimmung mit einem der Ansprüche 1 bis 8 zu bilden, wobei das Fügewerkzeug mittels einer Roboterhandhabeanlage gehandhabt wird.

10. Fügevorrichtung für die Herstellung einer genieteten Fügeverbindung in mindestens zwei sich überdeckenden Werkstücken (W₁, W₂), die ein Fügewerkzeug (10) mit einem hin- und hergehenden Stempel (16) aufweist, der über einer Matrize (12) angeordnet ist, über der die Werkstücke (W₁, W₂) getragen werden können, wobei der Stempel (16) in Richtung der Matrize (12) für das Einsetzen eines Niets (R) in die Werkstücke (W₁, W₂) und das Anwenden einer Druckkraft auf die Werkstücke (W₁, W₂) in einem Fügebereich beweglich ist, **dadurch gekennzeichnet, dass** die Matrize (12) mit einer Ultraschallenergiequelle verbunden ist, so dass sie eine Ultraschallenergie auf mindestens eines der Werkstücke (W₁, W₂) im Fügebereich über mindestens einen Teil der Zeit während der Herstellung der Fügeverbindung anwenden kann, um so die Verformbarkeit des mindestens einen der Werkstücke (W₁, W₂) im Fügebereich zu erhöhen.

11. Fügevorrichtung nach Anspruch 10, bei der die Ultraschallquelle mit der Matrize (12) mittels eines Ultraschalltrichters (25) verbunden ist und vorzugsweise mindestens ein Teil der Matrize (12) durch mindestens einen Teil des Ultraschalltrichters (25) bereitgestellt wird, wobei der Ultraschalltrichter (25) vorzugsweise eine erste Fläche aufweist, die zu den Werkstücken (W₁, W₂) hin liegt und einen darin definierten Matrizenhohlraum (21) aufweist.

12. Fügevorrichtung nach Anspruch 10 oder 11, bei der die Matrize (12) mittels eines Vorspannelementes in Richtung des Stempels (16) vorgespannt wird.

13. Fügevorrichtung nach einem der Ansprüche 10 bis 12, bei der die Ultraschallquelle mit der Matrize (12) verbunden ist, so dass die Ultraschallenergie auf den Fügebereich in einer Richtung angewandt wird, die im Wesentlichen die gleiche ist wie die Richtung der Druckkraft, die vom Stempel (16) angewandt wird, um die Werkstücke (W₁, W₂) zu verformen.

## Revendications

1. Procédé de production d'un joint dans au moins deux pièces à usiner en chevauchement (W₁, W₂) par l'intermédiaire d'un outil d'assemblage (10), comprenant un poinçon (16) pour insérer un rivet auto-perforant (R) dans les pièces à usiner (W₁, W₂) pour former le joint, les pièces à usiner (W₁, W₂) comportant une première surface (31) qui est la plus proche de l'outil (10), le procédé comprenant les étapes d'agencement des pièces à usiner (W₁, W₂) entre l'outil (10) et une matrice (12) et de positionnement d'un rivet (R) entre le poinçon (16) et la première surface (31), d'utilisation du poinçon (16) pour insérer le rivet (R) dans les au moins deux pièces à usiner en chevauchement (W₁, W₂), de sorte que la première surface (31) est percée par le rivet (R), le poinçon (16) appliquant une force de compression au cours de l'insertion du rivet pour déformer les pièces à usiner (W₁, W₂) en un joint au niveau d'une zone de jonction entre l'outil (10) et la matrice (12), **caractérisé en ce que** la matrice applique une énergie ultrasonore continue à au moins une des pièces à usiner (W₁, W₂) dans la zone de jonction pendant au moins une partie du temps de production du joint, de sorte à accroître la ductilité d'au moins une des pièces à usiner (W₁, W₂) dans la zone de jonction.

2. Procédé selon la revendication 1, dans lequel les au moins deux pièces à usiner en chevauchement (W₁, W₂) comprennent une première pièce à usiner (W₁), qui est la plus proche de l'outil (10), et une deuxième pièce à usiner (W₂), qui est la plus proche de la matrice (12), le rivet (R) étant inséré de sorte à ne pas pénétrer à travers la deuxième pièce à usiner (W₂).

3. Procédé selon l'une quelconque des revendications précédentes, dans lequel la matrice (12) fait au moins partie d'un cornet à ultrasons (25).

4. Procédé selon l'une quelconque des revendications précédentes, dans lequel le niveau d'énergie appliqué aux pièces à usiner (W₁, W₂) varie au cours de la formation du joint.

5. Procédé selon l'une quelconque des revendications précédentes, dans lequel l'énergie ultrasonore est appliquée dans une direction essentiellement identique à la direction de la force de compression déformant les pièces à usiner (W₁, W₂).

6. Procédé selon l'une quelconque des revendications précédentes, dans lequel les pièces à usiner (W₁, W₂) sont serrées entre l'outil (10) et la matrice (12) par une force de serrage dans la région entourant la zone de jonction pendant au moins une partie du temps nécessaire à la production du joint.

7. Procédé selon l'une quelconque des revendications précédentes, dans lequel une force de serrage négligeable ou nulle est appliquée pendant que le matériau est déformé par l'application de la force de compression, une force de serrage étant appliquée après la production du joint.

8. Procédé selon l'une quelconque des revendications précédentes, dans lequel l'énergie ultrasonore est un signal de vibration acoustique transmis aux pièces à usiner (W₁, W₂), le signal de vibration acoustique ayant de préférence une fréquence comprise dans l'intervalle allant de 18 à 60 kHz, et/ou le signal de vibration acoustique ayant une amplitude comprise entre 2 et 50 µm.

9. Procédé de fabrication d'un produit, utilisant un outil d'assemblage pour former un joint selon l'une quelconque des revendications 1 à 8, l'outil d'assemblage étant manipulé par un équipement de manipulation à robot.

10. Appareil d'assemblage pour produire un assemblage riveté dans au moins deux pièces à usiner en chevauchement (W₁, W₂), comprenant un outil d'assemblage (10) comportant un poinçon à déplacement alternatif (16) agencé au-dessus d'une matrice (12), sur laquelle les pièces à usiner (W₁, W₂) peuvent être supportées, le poinçon (16) pouvant être déplacé vers la matrice (12) pour insérer un rivet (R) dans les pièces à usiner (W₁, W₂) et appliquer une force de compression aux pièces à usiner (W₁, W₂) dans une zone de jonction, **caractérisé en ce que** la matrice (12) est accouplée à une source d'énergie ultrasonore, de sorte à pouvoir appliquer l'énergie ultrasonore à au moins une des pièces à usiner (W₁, W₂) dans la zone de jonction pendant au moins une partie du temps de production du joint, en vue d'accroître la ductilité d'au moins une des pièces à usiner (W₁, W₂) dans la zone de jonction.

11. Appareil d'assemblage selon la revendication 10, dans lequel la source ultrasonore est accouplée à la matrice (12) par l'intermédiaire d'un cornet à ultrasons (25), au moins une partie de la matrice (12) étant de préférence formée par au moins une partie du cornet à ultrasons (25), le cornet à ultrasons (25) comportant de préférence une première surface faisant face aux pièces à usiner (W₁, W₂), et comportant une cavité de matrice (21) qui y et définie.

12. Appareil d'assemblage selon les revendications 10 ou 11, dans lequel la matrice (12) est poussée vers le poinçon (16) par un élément poussoir.

13. Appareil d'assemblage selon l'une quelconque des revendications 10 à 12, dans lequel la source ultrasonore est accouplée à la matrice (12), de sorte que l'énergie ultrasonore est appliquée à la zone de jonction dans une direction essentiellement identique à la direction d'application de la force de compression par le poinçon (16) pour déformer les pièces à usiner (W₁, W₂).
